# EUROPÄISCHE PATENTSCHRIFT

(11) **EP 2 172 352 B1**
(45) Veröffentlichungstag und Bekanntmachung des Hinweises auf die Patenterteilung: **29.02.2012**
(21) Anmeldenummer: 09009315.4
(22) Anmeldetag: 17.07.2009
(51) Int. Cl.: B60G 17/02, B60G 13/14, B60G 17/015, B60G 17/019

(54) **Federunterlage für eine Tragfeder eines Kraftfahrzeugs**
Spring pad for the spring of a motor vehicle
Support de ressort de suspension d'un véhicule automobile

(30) Priorität: 01.10.2008 DE 102008050052
(43) Veröffentlichungstag der Anmeldung: 07.04.2010
(73) Patentinhaber: Audi AG, 85045 Ingolstadt (DE)
(72) Erfinder: Willems, Marco, 85049 Ingolstadt (DE)
(74) Vertreter: Asch, Konrad

(56) Entgegenhaltungen:
- DE-A1- 10 000 390
- DE-A1- 10 246 837
- DE-A1- 10 326 625
- DE-A1- 19 642 827
- FR-A1- 2 619 765
- JP-A- 2005 162 082
- US-A- 5 390 949

## Beschreibung

Die Erfindung betrifft eine Federunterlage für eine Tragfeder eines Kraftfahrzeuges gemäß dem Oberbegriff des Patentanspruches 1.

Um Kraftspitzen zu kompensieren und mittlere und höhere Frequenzen entsprechend zu dämpfen, werden an einer Schnittstelle zwischen der Karosserie und der Tragfeder Federaufnahmen aus Elastomermaterialien eingesetzt. Dabei werden je nach Ausführung und technischer Gestaltung des Fahrzeuges die Eigenschaften dieser Federaufnahmen durch entsprechende Geometrieanpassungen und Verwendung von unterschiedlichsten Materialien eingestellt. Dabei ist es von Nachteil, dass bei der Auslegung der Dämpfung und der Steifigkeit der Federaufnahme ein sehr breites Frequenzspektrum abgedeckt werden muss. Die Auslegung ist deshalb stets ein Kompromiss, so dass nicht alle Wünsche befriedigt werden können. Eine optimale Dämpfung und Steifigkeit ist von vielen Faktoren abhängig, so dass beispielsweise allein ein Wechsel der Felgenreifenkombination ein anderes Frequenzspektrum hervorruft. Dabei werden die in die Karosserie eingeleiteten Frequenzen und Kräfte von den Insassen anders wahrgenommen, weil aufgrund von mechanischen und akustischen Schwingungen eine Änderung eingetreten ist. So haben auch beispielsweise andere Einflüsse entsprechende Auswirkungen auf die in die Karosserie eingeleiteten Schwingungen, wie beispielsweise eine Fahrbahnoberfläche, unterschiedliche Beladungszustände, unterschiedliche Fahrzeugderivate usw.

Bei einem derartigen Fahrzeug werden unter energetischen Gesichtspunkten, die in die Karosserie eingeleiteten Schwingungen aus der Fahrbahnanregung als Energie über Körperschall erzeugt. Diese Energie wird, auf die Gesamtenergiebilanz des Fahrzeuges bezogen, Bestandteil des Rollwiderstandes werden und muss vom Antriebsstrang aufgebracht werden.

Tragfedern stützen sich üblicherweise oben gegen die Karosserie und unten gegen den Radträger oder einen Fahrwerkslenker ab. Alternativ ist der Verbau in einem Federbein mit am Federbein angebrachten Federtellern möglich.

Beispielsweise ist eine Federunterlage aus der DE 297 22 552 U1 bekannt geworden, die für Federlager der Hinterachse des Kraftfahrzeuges eingesetzt werden. Die Federunterlage weist dabei einen scheibenförmigen Körper aus einem elastomeren Material auf. Federunterlagen dieser Art sind allgemein bekannt und dienen der oberen und unteren Abstützung der Tragfeder.

In der DE 101 06 915 C2 wird eine Federanordnung mit einer als Schraubendruckfeder ausgebildeten Tragfeder beschrieben. Die Enden sind dabei über scheibenartige Federunterlagen einerseits an einer Karosserie und andererseits an einem Radführungsteil eines Kraftfahrzeuges mittelbar abgestützt.

Die JP 2005 162 082 A2 zeigt einen Dämpfer für ein Kraftfahrzeug mit einem Federteller auf dem sich einerseits die Tragfeder abstützt und andererseits eine Verbindung zu der Karosserie realisiert wird. Sowohl im Bereich des Federtellers als auch im Bereich der Karosserie weist diese Schrift Piezoelemente auf.

Eine gattungsgemäße, sämtliche Merkmale des Oberbegriffs des Patentanspruches 1 aufweisende Federunterlage ist in der DE 102 46 837 A1 offenbart.

Der Erfindung liegt die Aufgabe zugrunde, eine Federunterlage für eine Tragfeder eines Kraftfahrzeugs gemäß der im Oberbegriff des Patentanspruches 1 angegebenen Art derart weiterzubilden, dass eine ausgewogene Fahrweise bei unterschiedlichen Gegebenheiten stets möglich ist.

Gelöst wird die Aufgabe durch die Merkmale des Anspruches 1.

Es wird vorgeschlagen, dass an den Tragfedern mindestens an einem ihrer Enden eine aktive Federunterlage eingesetzt wird. Eine derartige aktive Federunterlage weist mindestens einen Piezoaktuator auf. Durch die Integration eines Piezoaktuators ist es möglich, die erzeugte Energie durch Energieumwandlung von mechanischer Energie in elektrische Energie zu betreiben.

Das Zusammenwirken von mechanischem Druck und elektrischer Spannung wird als Piezoelektrizität bezeich net. Dabei basiert der Effekt darauf, dass bei der Verformung von ganz bestimmten Materialien an deren Oberfläche elektrische Ladungen auftreten. In gleichem Maße ist es jedoch auch in umgekehrter Vorgehensweise möglich, beim Anlegen einer elektrischen Spannung eine Kraft zu erzeugen. So ist es möglich, durch diesen Effekt mittels elektrischer Anregungen einen Piezoaktuator in Schwingungen zu setzen.

Die erfindungsgemäße Federunterlage weist dabei ein Unterteil und ein Oberteil auf, wobei zwischen dem Unterteil und dem Oberteil der mindestens eine Piezoaktuator eingebettet ist. Eine derartige Federunterlage ist quasi in einer Sandwichbauweise so aufgebaut, dass der Piezoaktuator in der Federauflage integriert ist und von dem Unterteil und dem Oberteil formschlüssig bedeckt wird. Den äußeren Abschluss im Bereich des Piezoaktuators bildet eine entsprechende Dichtung oder Dichtungsmasse.

Der Vorteil einer derartigen Verwendung eines Piezoaktuators liegt darin, dass beispielsweise durch eine phasenverschobene Anregung der Piezoaktuator die Dämpfung der Federauflage den jeweiligen Betriebsbedingungen des Kraftfahrzeuges anpasst. So können beispielsweise gezielte Anregungsfrequenzen an der Krafteinleitungsstelle der Karosserie kompensiert werden und gleichzeitig der Fahrkomfort für die Insassen des Kraftfahrzeuges entsprechend gesteigert werden. Gleichzeitig ist es aber auch möglich, dass die stetig wechselnden Kräfte in der Federaufnahme durch den piezoelektrischen Effekt zu Erzeugung von elektrischer Energie genutzt und ins Boardnetz eingespeist werden.

In den nachfolgenden Zeichnungen wird in einer schematischen Darstellung ein bevorzugtes Ausführungsbeispiel einer derartigen Federunterlage wiedergegeben.

Es zeigt:
- Fig. 1:: Eine Anbindung einer Tragfeder an einer Ka- rosserie mit einer dazwischen befindlichen Federunterlage;
- Fig. 2:: in einer Schnittdarstellung eine Federunter- lage mit einem Piezoaktuator.

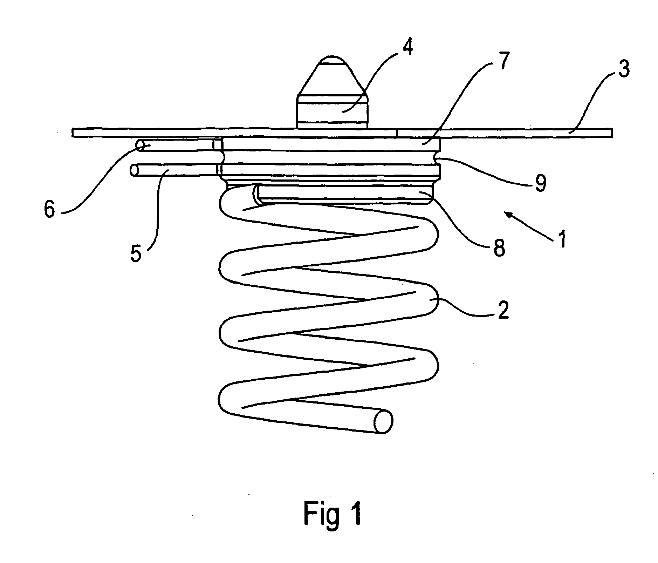

Die technische Umsetzung der Erfindung wird in der Figur 1 deutlich, in der ein Ende einer Tragfeder 2 an einer Federunterlage 1 anliegt, die wiederum an der Karosserie befestigt ist. Das andere Ende ist beispielsweise auf einem Radträger über eine zweite Federunterlage befestigt.

Die Federunterlage 1 besteht im Wesentlichen aus einem Oberteil 7, der an der Karosserie 3 und einem Unterteil 8, der an der Tragfeder 2 aufliegt oder befestigt ist. Zwischen dem Oberteil 7 und dem Unterteil 8 befindet sich ein Piezoaktuator 10, der mit elektrischen Anschlüssen 5 und 6 versehen ist. Den äußeren Abschluss des Piezoaktuators 10 bildet eine Dichtung 9.

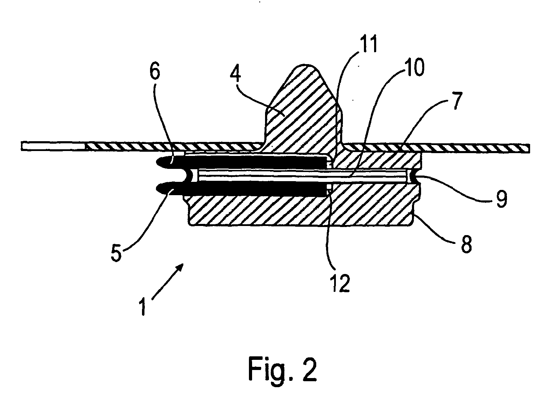

In der Figur 2 kann die zweiteilige Federauflage 1, bestehend aus dem Oberteil 7 und dem Unterteil 8 und dem dazwischen befindlichen Piezoaktuator 10 noch einmal deutlicher betrachtet werden. Hierbei übernimmt der untere Teil 8 der Federunterlage 1 die direkte Aufnahme der Feder, die sowohl aus Stahl oder auch als Luftfeder ausgebildet sein kann. Der obere Teil der Federunterlage 1, nämlich das Oberteil 7 stellt dabei dann die Verbindung zur Karosserie her. Ähnlich einem Sandwich ist zwischen dem Oberteil 7 und dem Unterteil 8 der Piezoaktuator 10 eingebettet. Die elektrischen Anschlüsse 5 und 6 sind jeweils an den Außenflächen des Piezoaktuators 10 angebracht und innerhalb von Freischnitten 11, 12 im Oberteil 7 und im Unterteil 8 druckfrei eingebettet sind. Über diese elektrischen Anschlüsse 5 und 6 kann der Aktuator 10 elektrisch angeregt werden bzw. es ist möglich, die durch den piezoelektrischen Effekt entstandenen potentialen Unterschiede von Ober- und Unterseite des Aktuators als Spannung abgegriffen zu werden.

### BEZUGSZEICHENLISTE

- 1: Federunterlage
- 2: Tragfeder
- 3: Karosserie
- 4: Befestigung
- 5: elektrischer Anschluss
- 6: elektrischer Anschluss
- 7: Oberteil
- 8: Unterteil
- 9: Dichtung
- 10: Piezoaktuator
- 11: Freischnitt
- 12: Freischnitt

## Patentansprüche

1. Federunterlage (1) für eine Tragfeder (2) eines Kraftfahrzeuges, wobei die Tragfeder (2) karosserieseitig und/oder radträgerseitig über eine Federunterlage (1) festgelegt ist, und die Federunterlage (1) einen Piezoaktuator (10) umfasst, **dadurch gekennzeichnet, dass** die Federunterlage (1) aus einem Unterteil (8) und einem Oberteil (7) besteht, und zwischen dem Unterteil (8) und dem Oberteil (7) der Piezoaktuator (10) eingebettet ist, wobei zwischen dem Unterteil (8) und dem Oberteil (7) eine Dichtung (9) vorhanden ist und in dem Oberteil (7) und dem Unterteil (8) jeweils ein Freischnitt (11, 12) vorhanden ist, die für eine druckfreie Zone elektrischer Anschlüsse (5, 6) sorgen und die Federunterlage (1) aus einem Elastomer besteht.

## Claims

1. Spring pad (1) for a suspension spring (2) of a motor vehicle, wherein the suspension spring (2) is fixed on the body side and/or wheel-carrier side via a spring pad (1), and the spring pad (1) comprises a piezo actuator (10), **characterized in that** the spring pad (1) consists of a lower part (8) and an upper part (7), and the piezo actuator (10) is embedded between the lower part (8) and the upper part (7), there being a seal (9) between the lower part (8) and the upper part (7), and there being respective clearance cuts (11, 12) in the upper part (7) and the lower part (8), said clearance cuts ensuring a pressure-free zone for electric connections (5, 6), and the spring pad (1) being composed of an elastomer.

## Revendications

1. Support de ressort (1) pour un ressort de suspension (2) d'un véhicule automobile, le ressort de suspension (2) étant fixé au moyen d'un support de ressort (1) du côté de la carrosserie et/ou du côté du support de roue, et le support de ressort (1) comportant un actionneur piézoélectrique (10), **caractérisé en ce que** le support de ressort (1) est constitué d'une partie inférieure (8) et d'une partie supérieure (7), et l'actionneur piézoélectrique (10) est inséré entre la partie inférieure (8) et la partie supérieure (7), un joint d'étanchéité (9) étant présent entre la partie inférieure (8) et la partie supérieure (7) et une découpure (11, 12) étant présente à chaque fois dans la partie supérieure (7) et la partie inférieure (8), lesquelles découpures assurent une zone sans pression de bornes électriques (5, 6), et le support de ressort (1) est constitué d'un élastomère.
